# EUROPÄISCHE PATENTANMELDUNG

(11) **EP 0 551 056 A1**
(43) Veröffentlichungstag der Anmeldung: **14.07.1993**
(21) Anmeldenummer: 92811014.7
(22) Anmeldetag: 22.12.1992
(51) Int. Cl.: A62D 3/00, B09B 3/00

(54) **Verfahren und Vorrichtung zum kontinuierlichen Einschmelzen von Reststoffen**

(30) Priorität: 07.01.1992 CH 13/92
(71) Anmelder: Sulzer Chemtech AG, CH-8404 Winterthur (CH)
(72) Erfinder: Moergeli, Rudolf, CH-8708 Männedorf (CH); Schaub, Martin, CH-8483 Kollbrunn (CH)
(74) Vertreter: Hammer, Bruno, Dr.

(57) **Zusammenfassung**

Zum kontinuierlichen Einschmelzen werden Reststoffe (1) mit schwermetall- oder schwefelhaltigen Komponenten in einer Heizeinrichtung (10) mit einem Schmelzbehälter (11) unter reduktiven Bedingungen (3) indirekt auf eine Einschmelztemperatur TS aufgeheizt. Im Schmelzbehälter bilden sich mindestens zwei übereinanderliegende Schmelzeschichten (13, 14), welche je separat über Leitungen (17, 18) abgeführt, abgekühlt und verfestigt werden. Eine schwerere untere Schmelzeschicht enthält dabei metallische und sulfidische Komponenten während die darüberliegende leichtere Schicht (14) glasartig ist.

## Beschreibung

Die Erfindung betrifft ein Verfahren zum kontinuierlichen Einschmelzen von Reststoffen und Rückständen mit Schwermetall- und/oder schwefelhaltigen Komponenten sowie eine Vorrichtung zur Ausführung des Verfahrens. Reststoffe und Rückstände aus Industrie, Gewerbe und Haushalt, welche im besonderen auch Rückstände mit schwer zu inertisierenden Schadstoffen enthalten z.B. Filterasche und Schlacken aus Verbrennungsanlagen, Lackschlämme aus Lackierbetrieben, Filterpressen- und Galvanikschlämme und Rückstände aus Rauchgasreinigungen. Dabei müssen alle in den Reststoffen enthaltenen Schadstoffe vor allem Schwermetalle wie Quecksilber, Blei, Zink und Kadmium wie auch allfällige giftige organische Komponenten wie Dioxine und Furane umgewandelt, inertisiert oder einer Wiederverwertung zugeführt werden. Schwermetalle wie Zink und Blei können auch einer Wiederverwertung zugeführt werden. Die schädlichen Komponenten der Reststoffe müssen soweit inertisiert werden, dass sie deponiefähig sind.

Bekannte Verfahren zur Inertisierung von Reststoffen sind z.B. Inklusionsverfahren oder Verglasung in grossen Wannen. Diese langsamen Glasschmelzverfahren sind z.B. im Abfallwirtschaftsjournal 1 (1989) Nr. 7/8, Seiten 27 bis 28 beschrieben. Bisher bekannte Einschmelzverfahren eignen sich nicht dafür, Gemische von Reststoffen, welche auch schwermetall- und schwefelhaltige Komponenten enthalten, in einem Prozess zu entsorgen.

Es ist daher Aufgabe der vorliegenden Erfindung, ein Verfahren und eine Vorrichtung zu schaffen, mit denen alle Reststoffe solcher Reststoffgemische in einem Prozess so behandelt werden, dass einerseits inertisierte, verglaste und deponiefähige Reststoffe ausgeschieden werden und andererseits schwer zu entsorgende Schwefelverbindungen und Schwermetallverbindungen in eine angereicherte Form übergeführt werden und damit auch besser als bisher aufgetrennt und entsorgbar oder verwertbar werden. Diese Aufgabe wird gelöst durch das Verfahren nach Anspruch 1 und mittels einer Vorrichtung nach Anspruch 10. Durch das Aufheizen der Reststoffe mit einer indirekten Beheizung unter reduktiven Bedingungen auf eine hohe Temperatur TS wird einerseits die Sulfidbildung gefördert und die Schwermetallverbindungen reduziert, so dass eine schwere, metallisch-sulfidische Schmelzeschicht entsteht, welche mit einer separaten Leitung konzentriert, abgeführt und einer Weiterverwertung zugeführt werden kann. Gleichzeitig wird dadurch eine leichtere, glasartige Schmelzeschicht abgetrennt, welche mit einer zweiten Abführleitung aus dem Schmelzbehälter abgeführt und inertisiert wird. Die abhängigen Ansprüche betreffen vorteilhafte Weiterbildungen der Erfindung. So können den Reststoffen zur verstärkten Sulfidbildung und zur Reduktion von Schwermetallen, Reduktionsmittel zugegeben werden wie Kohle, Koks oder kohlenstoffhaltige Reststoffe. Es können auch weitere Zuschläge wie Eisen-Verbindungen zur Schwefeleinbindung oder saure oder alkalische Zuschläge zur Verbesserung der Glasqualität im Einschmelzprozess zugegeben werden. Mit einer vorgeschalteten Vorheizstufe kann anfallende Niedertemperaturenergie genutzt und auch die Durchlaufkapazität des Schmelzbehälters erhöht werden. Die Reduktionsmittel und Zuschläge können auch schon in der Vorheizstufe zugegeben werden. Durch Ventilsysteme der Schmelzeabführleitungen wie Ueberlauf-, Siphonsysteme und beheizbare Gefrierabläufe wie auch durch Trennwände im Schmelzebereich können die Einschmelz- und Behandlungsprozesse optimal gesteuert bzw. kontrolliert werden. Eine nochmals erhöhte Trennwirkung kann durch zwei in Serie geschaltete Schmelzbehälter, welche separat beheizt sind, erzielt werden.

Im folgenden wird die Erfindung anhand von Beispielen und Figuren weiter erläutert. Dabei zeigen:
- Fig. 1: Schematisch eine erfindungsgemässe Einschmelzvorrichtung mit zwei separaten Schmelzeabführleitungen;
- Fig. 2: ein Beispiel mit einer Vorheizstufe und mit Trennwänden im Schmelzbehälter;
- Fig. 3: ein Beispiel mit drei Schmelzeschichten und zugehörigen separaten Abführleitungen sowie mit Zuführungen für Reduktionsmittel und Zuschläge;
- Fig. 4: ein Beispiel mit zwei in Serie geschalteten Schmelzbehältern.

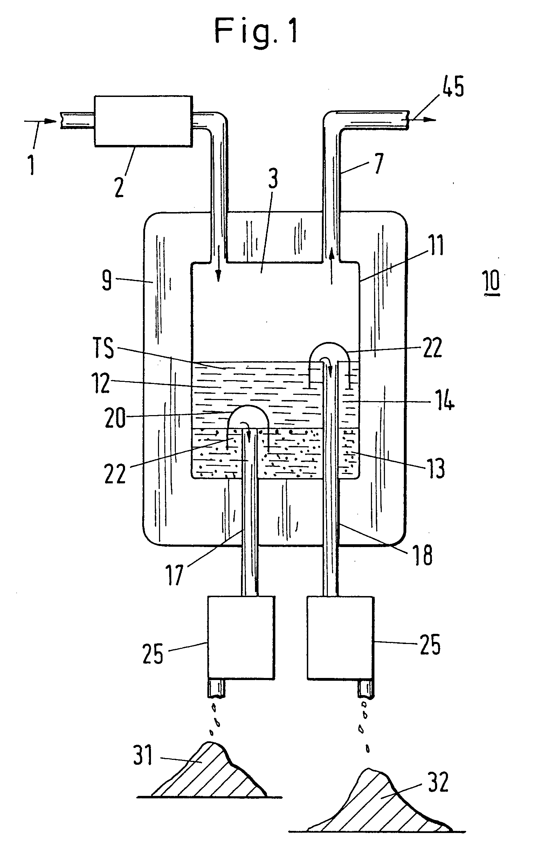

Die schematische Darstellung nach Fig. 1 zeigt eine erfindungsgemässe Einschmelz- und Behandlungsvorrichtung mit einer Heizeinrichtung 10, in welcher die Reststoffe 1 über eine Dosiereinrichtung 2 einem Schmelzbehälter 11 mit einer Heizung 9 zugeführt werden. Diese Heizung kann z.B. als Induktionsheizung, als elektrische Widerstandsheizung oder als Brennstoffheizung ausgeführt sein. Im Schmelzbehälter 11 wird zur Behandlung der Reststoffe 1 eine reduzierende Atmosphäre 3 eingestellt und auf eine Temperatur TS aufgeheizt, wodurch sich mindestens zwei Schmelzeschichten 13, 14 in der Schmelze 12 ausbilden. Eine schwere untere, schwermetallisch-sulfidische Schicht 13 und eine darüberliegende leichtere glasartige Schicht 14, welche z.B. Silikate enthält. Die Schmelzeschichten 13, 14 werden über zwei separate Abführleitungen 17, 18 zur Verfestigung in Kühlvorrichtungen 25 geleitet, aus denen sie als separierte, inertisierte (32) bzw. weiterverwertbare Reststoffe 31 anfallen. Entstehende Abgase werden über eine Leitung 7 aus dem Schmelzbehälter 11 abgeführt. Die Schmelzeabführleitungen 17, 18 sind durch ein Ventilsystem 20, hier in Form von einem Siphon 22, kontrolliert.

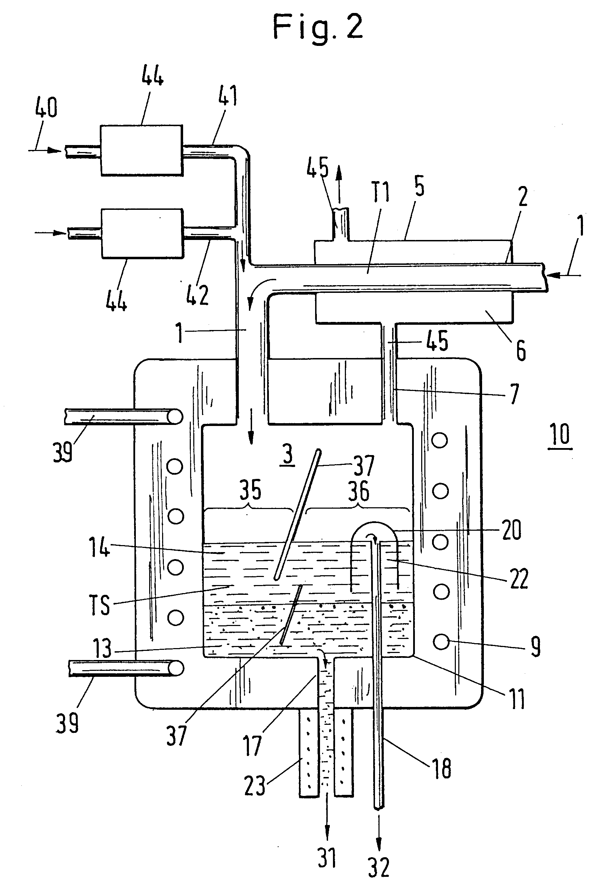

Im Beispiel von Fig. 2 ist als Ventilsystem der Abführleitung 17 ein beheizbarer Gefrierablauf 23 eingesetzt. Die Heizung 9 des Schmelzbehälters besteht hier aus einer Induktionsheizung mit Stromzuleitungen und Wasserkühlung 39. Die Abgase 45 aus dem Schmelzbehälter 11 werden über eine Leitung 7 einer Vorheizstufe 5 zu deren Beheizung 6 zugeführt. In dieser Vorheizstufe werden die Reststoffe 1 auf eine Temperatur T1 vorgewärmt und anschliessend mit Reduktionsmitteln 40 über eine Leitung 41 und allfälligen weiteren Zugabestoffen 42, welche durch die Dosiereinrichtungen 44 zugegeben werden, versetzt und in den Schmelzbehälter 11 geführt. Im Schmelzbehälter sind Trennwände 37 eingebaut, welche den Schmelzraum in eine Reaktionszone 35 und eine Beruhigungszone 36 unterteilen. Dies verbessert die Trennung der Reststoffe in die einzelnen Schmelzeschichten weiter. Die Trennwände oder Trennelemente 37 können Oeffnungen enthalten bzw. sind nicht durchgehend ausgebildet, so dass alle Schmelzeschichten, auch eine oberste Schwimmschicht 15 von der Reaktionszone 35 in die Beruhigungszone 36 und zu ihren Abführleitungen gelangen können.

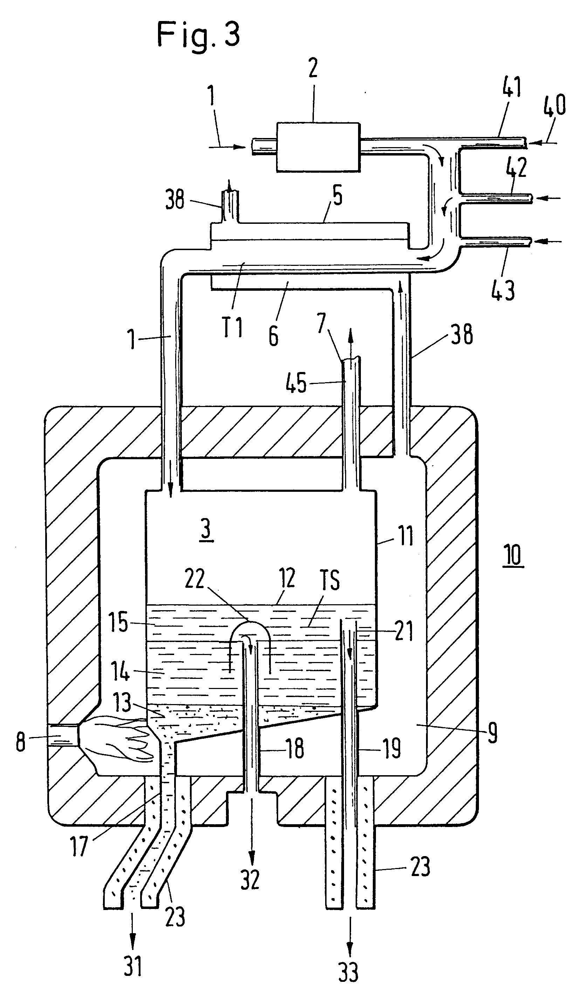

Im Beispiel von Fig. 3 werden den Reststoff 1 verschiedene Reduktionsmittel 41 und Zugabestoffe 42, 43 vor der Vorheizstufe 5 zudosiert. Der Schmelzbehälter 11 wird hier von einer Brennstoffheizung 8 erhitzt, wobei deren Rauchgase 38 zur Erwärmung 6 der Vorheizstufe genutzt werden. Alle entstehenden Abgase 45, auch jene aus dem Vorheizbereich 5, werden durch die heissen Zonen des Schmelzbehälters 11 mit Temperatur TS hindurchgeführt, bevor sie über die Leitung 7 abgezogen werden. Dadurch werden auch allfällig entstehende giftige organische Substanzen wie Dioxine und Furane thermisch zersetzt und damit unschädlich gemacht. Im Schmelzbehälter 11 bilden sich hier drei übereinanderliegende Schmelzeschichten aus. Zusätzlich zur untersten, metallisch-sulfidischen Schicht 13 und der darüberliegenden glasartigen, silikatischen Schicht 14 bildet sich hier eine leichte Schwimmschicht 15 aus, welche z.B. aus Alkali- und Erdalkalimetallsalzen besteht. Diese oberste Schicht wird über einen Ueberlauf 21 abgezogen. Die Schmelzeabführleitungen 17 und 19 sind wiederum mit beheizbaren Gefrierabläufen 23 kontrolliert.

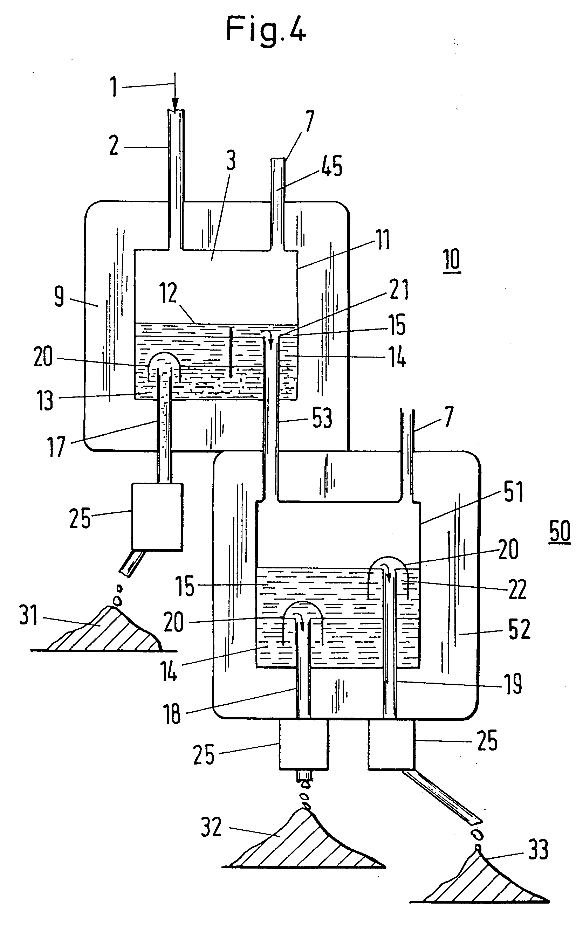

Im Beispiel von Fig. 4 ist einer ersten Behandlungs- und Einschmelzstufe 10 eine zweite Schmelz- und Trennstufe 50 nachgeschaltet. Das Reststoffgemisch 1 wird im ersten Schmelzbehälter 11 in die drei Schmelzeschichten 13, 14, 15 separiert, wobei hier nur die unterste, schwerste Schicht 13 abgelassen wird 31. Die darüberliegenden Schmelzeschichten 14, 15 werden über einen Ueberlauf 53 in den zweiten Schmelzbehälter 51 geführt, dort weiter getrennt und je separat über die Leitungen 18, 19 und die Kühlvorrichtungen 25 in inertisierte, deponierbare bzw. weiterverwertbare Formen 32, 33 übergeführt. Die Heizungen 9 und 52 der beiden Einschmelzstufen 10 und 50 sind separat steuerbar.

Beispiele für das reduktive Verfahren sind:

CaSO₄ + H₂ → CaS + H₂0 + 1,5O₂

CaS + FeO → FeS + CaO

## Patentansprüche

1. Verfahren zum kontinuierlichen Einschmelzen von Reststoffen mit schwermetall- und/oder schwefelhaltigen Komponenten, **dadurch gekennzeichnet**, dass die Reststoffe (1) in einer Heizeinrichtung (10) mit einem Schmelzbehälter (11) unter reduktiven Bedingungen indirekt auf eine Temperatur TS aufgeheizt werden, welche mindestens der Fliesstemperatur der Reststoffe entspricht, und entstehende Abgase abgeführt werden und wobei sich im Schmelzbehälter mindestens zwei übereinanderliegende Schmelzeschichten (13, 14, 15) bilden und dass diese Schmelzeschichten je separat abgeführt und abgekühlt werden, wobei die schwerere untere Schicht (13) metallische und/oder sulfidische Komponenten enthält und die darüberliegende leichtere Schicht (14) glasartig ist.

2. Verfahren nach Anspruch 1, dadurch gekennzeichnet, dass die untere metallisch-sulfidische Schicht (13) einer Weiterverwertung zuführbar ist, während die darüberliegende glasartige Schicht (14) durch Abkühlung in einen inerten, festen Endzustand gebracht wird.

3. Verfahren nach Anspruch 1 oder 2, dadurch gekennzeichnet, dass den Reststoffen zur verstärkten Sulfidbildung und Reduktion von Schwermetallen vor oder während dem Aufheizen Reduktionsmittel (40, 41) zugegeben werden.

4. Verfahren nach Anspruch 3, gekennzeichnet durch die Zugabe von Kohle, Koks oder kohlenstoffhaltigen Reststoffen als Reduktionsmittel (40).

5. Verfahren nach einem der vorangehenden Ansprüche, dadurch gekennzeichnet, dass Eisen oder Eisenverbindungen, z.B. Eisenspäne, Eisenoxid oder Schlacken, zur Schwefeleinbindung zugegeben werden (42).

6. Verfahren nach einem der vorangehenden Ansprüche, gekennzeichnet durch die Zugabe (42, 43) von sauren oder alkalischen Zuschlägen zur Verbesserung der Glasqualität (z.B. Quarz, Sand) und erhöhter Schwefeleinbindung (z.B. Kalk).

7. Verfahren nach einem der vorangehenden Ansprüche, dadurch gekennzeichnet, dass die Reststoffe vor der Schmelzstufe einen Vorheizbereich (5) durchlaufen, dessen Temperatur T1 unter der Einschmelztemperatur TS liegt.

8. Verfahren nach Anspruch 7, dadurch gekennzeichnet, dass Reduktionsmittel (40) oder Zuschläge (42, 43) in der Vorheizstufe (5) zugegeben werden.

9. Verfahren nach einem der vorangehenden Ansprüche, dadurch gekennzeichnet, dass die Aufheiztemperatur TS maximal 1 600^{o}C beträgt.

10. Vorrichtung zum kontinuierlichen Einschmelzen von schwermetall- und/oder schwefelhaltigen Reststoffen (1) gemäss Verfahren nach einem der Ansprüche 1 bis 8, gekennzeichnet durch eine indirekte Heizeinrichtung (10) mit einer Zuführung (2) für die Reststoffe, mit einer Abgasleitung (45) und einem beheizten Schmelzbehälter (11), welcher mindestens zwei Abführleitungen (17, 18, 19) für die mindestens zwei Schmelzeschichten (13, 14, 15) auf unterschiedlichen Niveaus aufweist.

11. Vorrichtung nach Anspruch 10, dadurch gekennzeichnet, dass weitere Zuführungen für Reduktionsmittel (41) und Zugabestoffe (42, 43) wie z.B. Kohle oder Eisen vorgesehen sind.

12. Vorrichtung nach Anspruch 10 oder 11, dadurch gekennzeichnet, dass die Schmelzeabführleitungen durch Ventilsysteme (20), wie Ueberlauf- (21), Siphonsysteme (22) oder durch einen beheizbaren Gefrierablauf (23) kontrollierbar sind.

13. Vorrichtung nach einem der Ansprüch 10 bis 12, dadurch gekennzeichnet, dass die Schmelzstufe eine Induktionsheizung, eine elektrische Widerstandsheizung oder eine Brennstoffheizung (8) aufweist.

14. Vorrichtung nach einem der Ansprüche 10 bis 13, dadurch gekennzeichnet, dass der Schmelzstufe eine Vorheizstufe (5) vorgeschaltet ist.

15. Vorrichtung nach Anspruch 14, dadurch gekennzeichnet, dass die Vorheizstufe (5) Zuführungen für Zuschlagstoffe (41, 42, 43) aufweist.

16. Vorrichtung nach einem der Ansprüche 10 bis 15, dadurch gekennzeichnet, dass der Schmelzbehälter (11) mindestens eine Trennwand (37) im Schmelzebereich aufweist.

17. Vorrichtung nach Anspruch 16, dadurch gekennzeichnet, dass im Schmelzbehälter ein Reaktionsraum (35) und ein Beruhigungsraum (36) durch eine Trennwand (37) abgegrenzt werden.

18. Vorrichtung nach Anspruch 16, gekennzeichnet durch eine Trennwand (37) zur Separierung von Schmelzeschichten.

19. Vorrichtung nach einem der Ansprüche 10 bis 18, dadurch gekennzeichnet, dass mindestens zwei in Serie geschaltete Schmelzbehälter (11, 51) vorgesehen sind.

20. Vorrichtung nach Anspruch 19, dadurch gekennzeichnet, dass die Temperaturen der Schmelzbhälter (11, 51) einzeln einstellbar sind.

21. Vorrichtung nach Anspruch 19, dadurch gekennzeichnet, dass im ersten Schmelzbehälter (11) die unterste Schmelzeschicht (13) abgezogen wird.

22. Vorrichtung nach einem der Ansprüche 10 bis 21, dadurch gekennzeichnet, dass das Volumen des Schmelzbehälters (11) maximal 0.5 m³ beträgt.
